# EUROPEAN PATENT SPECIFICATION

(11) **EP 3 088 810 B1**
(45) Date of publication and mention of the grant of the patent: **20.09.2017**
(21) Application number: 14875361.9
(22) Date of filing: 16.12.2014
(51) Int. Cl.: F24F 11/02, F24F 11/00

(54) **AIR CONDITIONING SYSTEM**
KLIMAANLAGE
SYSTÈME DE CLIMATISATION

(30) Priority: 25.12.2013 JP 2013266859
(43) Date of publication of application: 02.11.2016
(73) Proprietor: Daikin Industries, Ltd., Osaka-shi, Osaka 530-8323 (JP)
(72) Inventor: NABESHIMA, Norihiro, Osaka-shi, Osaka 530-8323 (JP); IKEDA, Makoto, Osaka-shi, Osaka 530-8323 (JP)
(74) Representative: Hoffmann Eitle
(86) International application number: PCT/JP2014/083263
(87) International publication number: WO 2015/098622

(56) References cited:
- WO-A1-2008/105354
- JP-A- H08 121 810
- JP-A- H08 121 810
- JP-A- 2006 234 280
- JP-A- 2008 215 637
- JP-A- 2010 152 641
- JP-A- 2010 152 641
- JP-A- 2011 099 622
- JP-A- 2011 099 622
- US-A1- 2011 054 700

## Description

### TECHNICAL FIELD

The present invention relates to an air conditioning system capable of providing air-conditioning-relevant information to a portable terminal via a public line.

### BACKGROUND ART

Recently it has become a common technique to connect a mobile telephone and a household electric device using a communication line so as to make remote operation possible, in which the electric device is operated in a simple manner from the mobile telephone while the user is out. For example, JP-A-2002-281169 discloses a system in which a remote operation adapter is installed in an electric device and the electric device is connected to the internet via the remote operation adapter. An air conditioning system having the features defined in the preamble of claim 1 is disclosed in WO 2008/105354 A1.

### SUMMARY OF THE INVENTION

### <Technical Problem>

In the above-described system disclosed in JP-A-2002-281169, the user performs an authentication operation of inputting an ID and password through the mobile telephone. If the authentication deems the user to be a registered user, the user can receive various services provided by a service provider, using various operation buttons displayed on the mobile telephone.

In the case of a common adapter, particularly an adapter connected to a network by a wireless LAN, to enable an authentication operation or the like to be performed, before such an operation settings relating to the wireless LAN must be entered when the adapter is attached to an air conditioner.

An air conditioner is often installed at a different height than a TV receiver, a refrigerator, an electric pot, and other household electric appliances, and often there are conditions in which the adapter must be installed at a height near the air conditioner. In conditions in which the adapter must be installed at a different height, a user or contractor must implement the settings for the wireless LAN at this height, and connecting the air conditioner to the wireless LAN proves difficult.

An object of the present invention is to provide an air conditioning system with which LAN settings can be easily implemented regardless of where the adapter is installed.

### <Solution to Problem>

According to the invention, this object is achieved by an air-conditioning system as defined in the claims.

According to a first aspect, the air-conditioning system comprises: an air conditioner which has a main body and a remote controller for transmitting operation information to the main body, and which can be operated by the remote controller; and a LAN connection unit installed in the air conditioner in order to connect the air conditioner to a LAN and transmit information obtained from the air conditioner through the LAN; the air conditioner being configured so that the remote controller can be used to implement connection settings pertaining to the LAN in the LAN connection unit. Therefore, because connection settings pertaining to the LAN in the LAN connection unit can be implemented using the remote controller for operating the air conditioner, the remote controller can be used to implement the LAN settings regardless of where the LAN connection unit is installed, even when someone such as a user must install the LAN connection unit in a difficult location. According to a second aspect the air conditioner has at least one of a display unit for presenting display and a sound unit for emitting sounds, in order to give notification of setting information regarding the settings pertaining to the LAN using the remote controller. Therefore, because the LAN setting information is displayed by the display unit and/or notifications are given by sounds from the sound unit, the settings pertaining to the LAN can be implemented in the LAN connection unit while confirming the specifics of the settings, using the display unit and/or the sound unit of the air conditioner. According to a third aspect the main body of the air conditioner has a LED as the display unit, and the setting information is displayed using the LED. Accordingly, even in cases in which, e.g., there is no display screen in the remote controller, or the remote controller is not bidirectional or cannot be used to notify the operator of setting information, the operator can use the LED to confirm the setting specifics in the LAN connection units when the LAN setting information is displayed using the LED of the main body. According to a fourth aspect the remote controller of the air conditioner has a display screen as the display unit, the main body of the air conditioner is capable of receiving information of settings pertaining to the LAN which is obtainable from the LAN connection unit, and the setting information is displayed on the display screen of the remote controller. Therefore, because the setting information is displayed on the display screen of the remote controller, settings pertaining to the LAN can be implemented while confirming the setting specifics in the hand holding the remote controller. According to a fifth aspect the LAN connection unit has a setting button for implementing settings pertaining to the LAN without using the remote controller. Accordingly, even in circumstances in which the remote controller of the air conditioner cannot be used, the settings pertaining to the LAN can be implemented by the setting button of the LAN connection unit without using the remote controller. According to a sixth aspect the LAN connection unit is an adapter, and the adapter is attached inside the air conditioner. Accordingly, because the adapter is attached inside the air conditioner, the labor of attaching the adapter to the air conditioner is eliminated, and because the settings pertaining to the LAN of the adapter can be implemented by the remote controller, the work that must be performed on the adapter inside the air conditioner in order to implement the settings is eliminated.

### <Advantageous Effects of Invention>

According to the first aspect of the present invention, it is possible to provide an air conditioning system in which settings pertaining to the LAN can be implemented in the LAN connection unit using the remote controller, and the LAN settings of the LAN connection unit can be easily implemented regardless of where the LAN connection unit is installed. According to the second aspect, the specifics of the settings can be confirmed by the display unit and/or the sound unit of the air conditioner even if the LAN settings in the LAN connection unit is indirectly implemented with the remote controller, and erroneous operations of the settings pertaining to the LAN in the LAN connection unit can therefore be reduced. According to the third aspect, the setting specifics of the LAN connection unit can be confirmed using the LED of the main body, and there can be a greater variety of air conditioner in which it is possible to confirm the setting specifics of the LAN connection unit in the air conditioner. According to the fourth aspect, specifics relating to the LAN connection unit can be confirmed in hand no matter where the LAN connection unit is installed, and convenience is improved. According to the fifth aspect, due to the LAN connection unit having the setting button, it is possible to resolve inconveniences in which LAN settings cannot be implemented in the LAN connection unit with an air conditioner to which the remote controller is not an accessory. According to the sixth aspect, it is possible to reduce the man-hours involved in constructing the air conditioner and the adapter, and in the settings pertaining to the LAN.

### BRIEF DESCRIPTION OF THE DRAWINGS

FIG. 1 is a schematic diagram showing the general configuration of an air conditioning system according to one embodiment of the present invention.
FIG. 2 is a circuit diagram for illustrating a configuration of an air conditioner.
FIG. 3 is a cross-sectional view showing an example of a configuration of an indoor unit.
FIG. 4 is a block diagram for illustrating an air conditioner and an adapter connected to a LAN.
FIG. 5 is a block diagram for illustrating a smartphone and an external server connected to a public line.
FIG. 6 (a) is a plan view for illustrating the normal display screen of a remote controller, and (b) is a plan view for illustrating the display screen of the remote controller when the adapter connection settings are implemented.
FIG. 7 is a plan view for describing an example of an air conditioner management screen.
FIG. 8 is a block diagram for describing an air conditioner having a LAN function.

### DESCRIPTION OF EMBODIMENTS

### (1) Outline of Configuration of Air Conditioning System

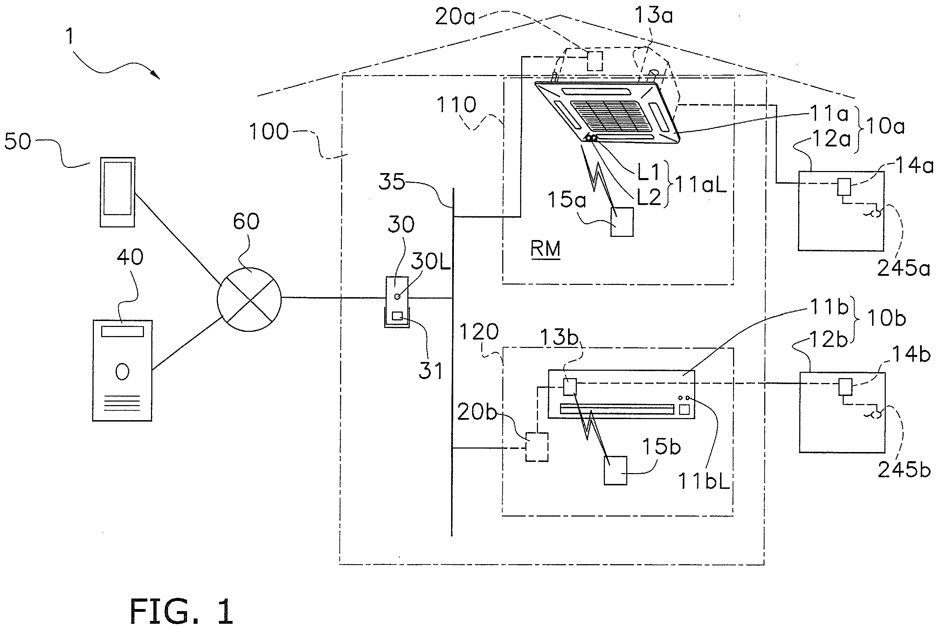

An air conditioning system according to one embodiment of the present invention is described below. FIG. 1 shows an outline of the overall configuration of the air conditioning system. The air conditioning system 1 comprises air conditioners 10a, 10b, adapters 20a, 20b, a router 30, a local area network 35 (referred to below as a wireless LAN), an external server 40, and a smartphone 50. A network is built wirelessly for the wireless LAN 35. In the air conditioning system 1 described in this embodiment, the air conditioner 10a is embedded in the ceiling and the air conditioner 10b is embedded in the wall.

This air conditioning system 1 is configured so that information of the air conditioners 10a, 10b can be acquired from the user's smartphone 50 and the air conditioners 10a, 10b can be operated, using the external server 40 and the adapters 20a, 20b. To accomplish this, the smartphone 50 and the external server 40 are able to connect to the internet, and the server 40 and the adapters 20a, 20b can be connected via the internet by the router 30.

The router 30, connecting a public line 60 including the internet and the wireless LAN 35 laid in a building 100, is installed in the building 100. The wireless LAN 35, which utilizes the functions of the router 30, is configured by wirelessly connecting the adapters 20a, 20b to the router 30, the adapters being connected by wires to the air conditioners 10a, 10b. In addition to the adapters 20a, 20b, a personal computer, or another network device such as a printer (not shown) used in the building 100 may also be connected to the wireless LAN 35. For the smartphone 50 to manage the air conditioners 10a, 10b via the external server 40, the air conditioners 10a, 10b must be registered in the external server 40 in advance, but the initial settings for doing so are described hereinafter.

### (2) Detailed Configuration of Air Conditioning System

### (2-1) Configuration of Air Conditioners

The air conditioners 10a, 10b are configured from indoor units 11a, 11b installed in rooms 110, 120 of the building 100, and outdoor units 12a, 12b installed outside of the building 100, as shown in FIG. 1. The indoor units 11a, 11b are connected one-to-one with the adapters 20a, 20b. Therefore, a remote controller 15a and the adapter 20a are installed in the room 110 in which indoor control devices 13a, 13b of the indoor units 11a, 11b of the air conditioners 10a, 10b are installed, and the router 30 is installed in the building 100 in which the air conditioners 10a, 10b are installed. The air conditioners 10a, 10b are connected via the router 30 to the public line 60, which is outside of the building 100.

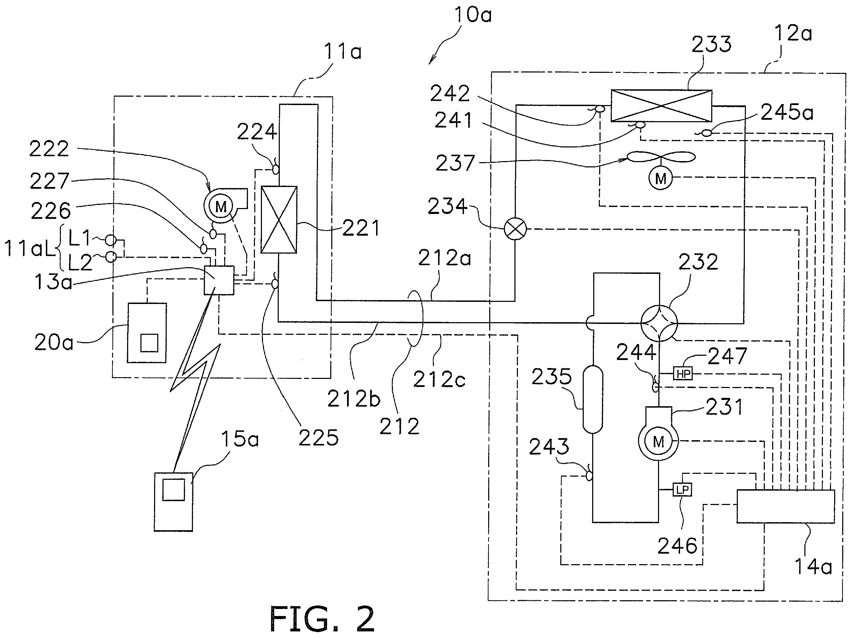

The indoor units 11a, 11b and the outdoor units 12a, 12b are connected by refrigerant pipes. FIG. 2 is used to describe an example of the specific configuration of the air conditioner 10a having the indoor unit 11a and the outdoor unit 12a. Though the air conditioner 10b and the air conditioner 10a are different types of machines, the air conditioner 10b can be configured by a vapor-compression refrigeration circuit similar to the air conditioner 10a. In FIG. 2, solid lines connecting devices represent refrigerant pipes, and dashed lines connecting devices represent signal transmission lines.

The outdoor unit 12a is connected by refrigerant pipes to the indoor unit 11a installed indoors, and the outdoor unit and the indoor unit 11a together configure the refrigerant circuit of the air conditioner 10a. To accomplish this, the indoor unit 11a and the outdoor unit 12a communicate via a communication pipe 212 through which refrigerant communication pipes 212a, 212b, a signal transmission line 212c, and other components pass. To configure the refrigerant circuit shown in FIG. 1, an indoor heat exchanger 221 and other components are provided to the indoor unit 11a, and a compressor 231, a four-way switching valve 232, an outdoor heat exchanger 233, an electric valve 234, an accumulator 235, and other components are provided to the outdoor unit 12a.

The first port of the four-way switching valve 232 is connected to the discharge side of the compressor 231. One inlet/outlet of the outdoor heat exchanger 233 is connected to the second port of the four-way switching valve 232, the accumulator 235 is connected to the third port, and the refrigerant communication pipe 212b is connected to the fourth port. The four-way switching valve 232 is switched to the pathway indicated by the solid lines during air-cooling, and during air-warming, the four-way switching valve 232 is switched to the pathway indicated by the dashed lines.

During air-cooling, refrigerant compressed and discharged by the compressor 231 is sent to the outdoor heat exchanger 233 via the four-way switching valve 232. During air-cooling, the outdoor heat exchanger 233 functions as a condenser where heat exchange with the outside air takes place due to refrigerant condensation, and refrigerant that has lost heat is then sent to the electric valve 234. The electric valve 234 functions as an expansion valve, where high-pressure liquid refrigerant changes to low-pressure wet vapor. Refrigerant thus expanded by the electric valve 234 then passes through the refrigerant communication pipe 212a and enters the indoor heat exchanger 221. During air-cooling, the indoor heat exchanger 221 functions as an evaporator where heat exchange between indoor air and the refrigerant takes place due to the evaporation of the refrigerant, and refrigerant that has taken heat and risen in temperature is sent through the refrigerant communication pipe 212b and the four-way switching valve 232 to the accumulator 235 connected to the intake side of the compressor 231.

During air-warming, refrigerant compressed and discharged by the compressor 231 is sent from the four-way switching valve 232 through the refrigerant communication pipe 212b to the indoor heat exchanger 221, which functions as a condenser. Following a pathway opposite from that of air-cooling, refrigerant is sent to the compressor 231 after leaving the outdoor heat exchanger 233 functioning as an evaporator. In other words, refrigerant circulates through a pathway starting from the compressor 231, passing sequentially through the four-way switching valve 232, the refrigerant communication pipe 212b, the indoor heat exchanger 221, the refrigerant communication pipe 212a, the electric valve 234, the outdoor heat exchanger 233, the four-way switching valve 232, and the accumulator 235, and returning to the compressor 231.

To facilitate heat exchange in the indoor heat exchanger 221 and the outdoor heat exchanger 223 of the indoor unit 11a and the outdoor unit 12a, respectively, the indoor heat exchanger 221 is provided with an indoor fan 222 for blowing indoor air, and the outdoor heat exchanger 233 is provided with an outdoor fan 237 for blowing outdoor air.

Furthermore, to enable the air conditioner 10a to perform air conditioning actions properly and efficiently, the air conditioner 10a includes an indoor control device 13a and an outdoor control device 14a shown in FIG. 2, the indoor control device 13a being incorporated in the indoor unit 11a and the outdoor control device 14a being incorporated in the outdoor unit 12a. The adapter 20a is built into the indoor unit 11a.

### (2-1-1) Indoor Unit

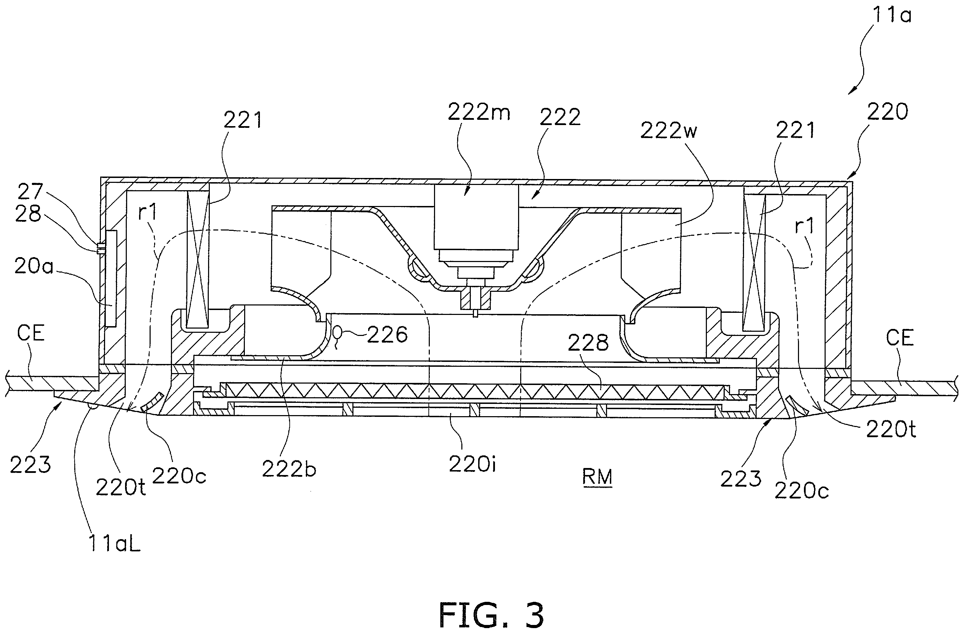

FIG. 3 is a cross-sectional view of an indoor unit attached to the ceiling. The indoor unit 11a, which is embedded in the ceiling, comprises a casing 220, which houses various configurational devices inside, and a decorative panel 223 disposed on the bottom side of the casing 220. The casing 220 of the indoor unit 11a, as shown in FIG. 3, is installed by being inserted into an opening formed in the ceiling CE of the air-conditioned room. The decorative panel 223 is installed by being fitted into the opening in the ceiling CE.

The indoor fan 222 is disposed inside the casing 220. The indoor fan 222 is a turbo fan, having a turbo impeller 222w linked to and rotatably driven by a fan motor 222m provided in the middle of the ceiling plate of the casing 220. The indoor fan 222 is designed so as to draw air from the room RM in from the bottom side of the turbo impeller 222w and blow the drawn-in air out to the outer periphery of the turbo impeller 222w, due to the rotation of the turbo impeller 222w. A bell mouth 222b for guiding air to the indoor fan 222 is provided to the bottom side of the indoor fan 222.

The decorative panel 223, which is disposed on the bottom side of the casing 220, has an intake port 220i formed in the middle, and a plurality (e.g., four) of blow-out ports 220t formed in the side edges. The intake port 220i of the decorative panel 223 is also provided with a filter 228 for removing dust in the air drawn in through the intake port 220i.

As described above, formed in the indoor unit 11a is an air channel r1 leading from the intake port 220i of the decorative panel 223 to the blow-out ports 220t via the filter 228, the bell mouth 222b, the indoor fan 222, and the indoor heat exchanger 221. Heat exchange with the air circulating through this air channel r1 between the room RM and the inside of the casing 220 is conducted by the indoor heat exchanger 221. The direction of the air flow blown through the air channel r1 and downward into the room RM from the ceiling CE is adjusted by flaps 220c. An indoor temperature sensor 226 installed in the casing 220 of the indoor unit 11a is provided to, e.g., the intake port 220i for indoor air in the indoor unit 11a, and this sensor measures the temperature of indoor air circulating through the air channel r1.

A plurality of light emitting diodes (LEDs) 11aL are also attached, and are exposed downward from the decorative panel 223 of the indoor unit 11a. The lighting of these LEDs 11aL is controlled by the indoor control device 13a. The LEDs 11aL of the indoor unit 11a include a running display light L1 and a timer display light L2, shown in FIG. 1. The running display light L1 is for providing a display pertaining to the running state of the indoor unit 11a. The timer display light L2 is used to confirm states such as settings and actions of a timer (not shown) built into the indoor control device 13a. Similar LEDs 11bL are provided to the indoor unit 11b (see FIG. 1).

Also built into the indoor unit 11a is the adapter 20a, which is attached to, e.g., the inner surface of the casing 220. A SETUP button 27 and a MODE button 28 of the adapter 20a protrude, e.g., out of the casing 220 so that they can be operated manually by a user and an installation worker in the ceiling CE.

### (2-1-2) Control System of Air Conditioners

The indoor control devices 13a, 13b transmit function information pertaining to the air conditioners 10a, 10b to the adapters 20a, 20b, as shown in FIG. 1. For example, the indoor control devices 13a, 13b transmit information indicating the specifics of run commands for the indoor units 11a, 11b inputted via the remote controllers 15a, 15b, as function information to the adapters 20a, 20b. To transmit such run commands, and also to receive and process various information, the remote controller 15a comprises a communication unit 151 to send and receive information with an indoor control device 13a, a control unit 152 including a central processing unit (CPU) and the like, a storage unit 153 including memory and the like, and an input/output unit 154 including a display screen DS2, operating buttons, and the like. The remote controller 15b has this same configuration. The information indicating the specifics of run commands is information such as setting specifics for the starting/stopping of the running of the air conditioners 10a, 10b, the running modes (air-cooling mode, air-warming mode, air-blowing mode, etc.), the set temperature, and turning the outdoor temperature display on and off. The indoor control devices 13a, 13b are configured so that when the initial settings of the adapters 20a, 20b are implemented, the adapter 20a is provided with the same information that was provided to the adapter 20a by the operation of the SETUP button 27 and the MODE button 28 of the adapter 20a.

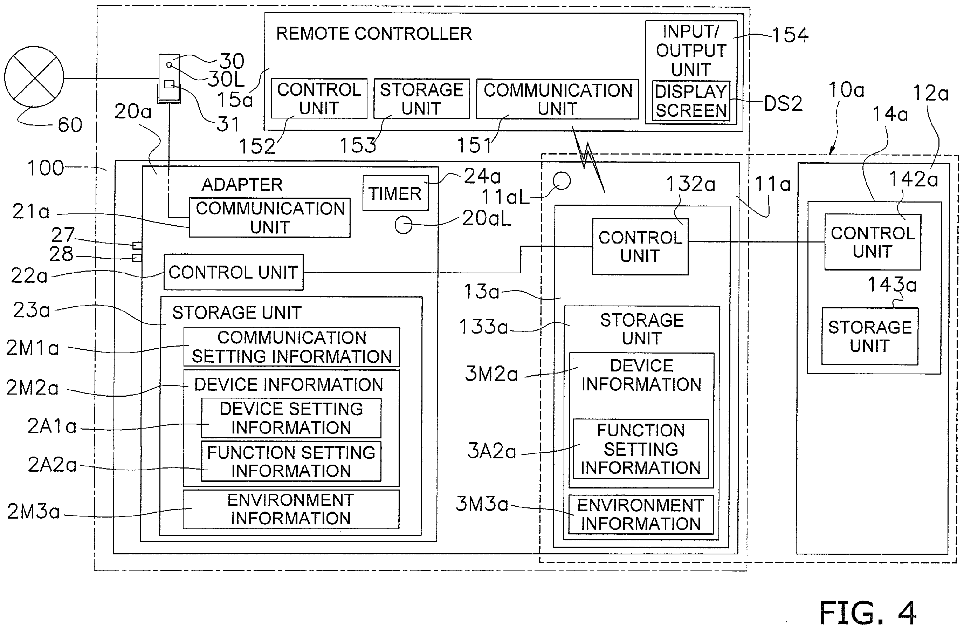

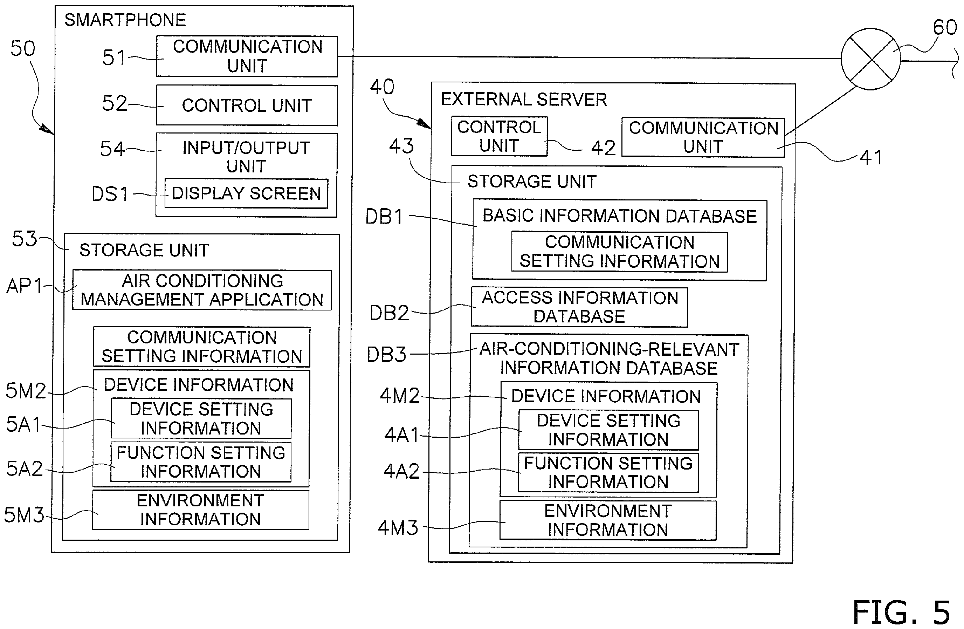

The indoor control device 13a executes control commands transmitted from the adapters 20a, 20b and the remote controller 15a. The control commands transmitted from the adapters 20a, 20b and the remote controller 15a are, e.g., run commands for the indoor units 11a, 11b, and commands that instruct the adapters 20a, 20b to transmit specific function information. This function information, which is one type of device information, is in the case of the air conditioner 10a stored by a control unit 132a shown in FIG. 4 in a function setting information storage area 3A2a of a device information storage area 3M2a of a storage unit 133a. In the case of the adapter 20a, the functional information is stored by a control unit 22a shown in FIG. 4 in a function setting information storage area 2A2a of a device information storage area 2M2a of a storage unit 23a. In the case of the external server 40, the functional information is stored by a control unit 42 shown in FIG. 5 in a function setting information storage area 4A2 of a device information storage area 4M2 of a storage unit 43. Furthermore, in the case of the smartphone 50, the functional information is stored by a control unit 52 shown in FIG. 5 in a function setting information storage area 5A2 of a device information storage area 5M2 of a storage unit 53.

The indoor control devices 13a, 13b transmit temperature data pertaining to the indoor temperature and the outdoor temperature, and/or humidity data pertaining to the indoor humidity, to the adapters 20a, 20b and the remote controller 15a. For example, the indoor control devices 13a, 13b transmit outside temperature data detected by outdoor temperature sensors 245a, 245b to the adapters 20a, 20b and the remote controller 15a. This environment information in the case of the air conditioner 10a is stored by the control unit 132a shown in FIG. 4 in an environment information storage area 3M3a of the storage unit 133a. In the case of the adapter 20a, the environment information is stored by the control unit 22a shown in FIG. 4 in an environment information storage area 2M3a of the storage unit 23a. In the case of the external server 40, the environment information is stored by the control unit 42 shown in FIG. 5 in an environment information storage area 4M3 of the storage unit 43. In the case of the smartphone 50, the environment information is stored by the control unit 52 shown in FIG. 5 in an environment information storage area 5M3 of the storage unit 53. Furthermore, the environment information is stored in the remote controller 15a and displayed on the display screen of the remote controller 15a.

The indoor control device 13a and the outdoor control device 14a are connected to each other via a communication line to send and receive data between each other, as shown in FIGS. 1, 2, and 4. The remote controller 15a, the adapter 20a, and other components are connected to the indoor unit 11a so as to be capable of communication, and communication takes place between the indoor unit 11a, and devices outside of the housing such as the remote controller 15a as well as built-in devices such as the adapter 20a. The indoor control device 13a is configured from the control unit 132a which includes a Central processing unit (CPU) and the like, the storage unit 133a which includes memory and the like, and peripheral circuitry (not shown). Control programs and control data are stored in the storage unit 133a of the indoor control device 13a. The control unit 132a performs control using the control programs and control data of the storage unit 133a. The control programs and control data of the storage unit 133a implement functions for the control unit 132a of the indoor control device 13a to provide the control unit 22a of the adapter 20a with the same commands as those provided to the adapter 20a by the operation of the SETUP button 27 and the MODE button 28 of the adapter 20a. The device information storage area 3M2a and the environment information storage area 3M3a are ensured to be in the storage unit 133a. The device information storage area 3M2a is a storage area for preserving device information of the air conditioner 10a. The environment information storage area 3M3a is a storage area for preserving environment information pertaining to the environment in which the air conditioner 10a is place, i.e., the indoor and/or outdoor temperature, humidity, and other factors. Furthermore, the function setting information storage area 2A2a is ensured to be in the device information storage area 2M2a, and the function setting information storage area 2A2a is a storage area for preserving function setting data of the air conditioner 10a. Function setting information is data indicating the specifics of the current set state of the air conditioner 10a, set by a run command. The outdoor control device 14a is also configured from a control unit 142a including a central processing unit (CPU) and the like, a storage unit 143a including memory and the like, and peripheral circuitry (not shown). Control programs and control data are stored in the storage unit 143a of the outdoor control device 14a. The control unit 142a performs control using the control programs and control data of the storage unit 143a.

The indoor unit 11a is provided with a liquid-side temperature sensor 224 and gas-side temperature sensor 225 for measuring the temperature of refrigerant in the inlet/outlet of the indoor heat exchanger 221, and an indoor temperature sensor 226 for measuring the temperature of indoor air. The temperature values measured by these temperature sensors 224 to 226 are transmitted to the indoor control device 13a. The indoor unit 11a is also provided with a humidity sensor 227 for measuring the humidity in the room, and humidity values measured by the humidity sensor 227 are also transmitted to the indoor control device 13a. Furthermore, the fan motor of the indoor fan 222, an airflow direction adjustment mechanism of the flaps 220c, and other components are connected to the indoor control device 13a. The indoor control device 13a controls, e.g., the rotational speed and/or the starting and stopping of the fan motor of the indoor fan 222. The indoor control device 13a causes the airflow direction adjustment mechanism to vary the angles of the flaps 220c, thereby adjusting the direction of conditioned air blown out from the blow-out ports into the room.

The outdoor unit 12a is provided with an outdoor heat exchanger temperature sensor 241, a heat exchanger outlet/inlet temperature sensor 242, an intake-side temperature sensor 243, a discharge-side temperature sensor 244, and an outdoor temperature sensor 245a, for measuring the temperatures of different parts of the outdoor unit 12a. The temperature values measured by these temperature sensors 241 to 245a are transmitted to the outdoor control device 14a. The outdoor unit 12a is also provided with an intake-side pressure sensor 246, a discharge-side pressure sensor 247, and other pressure sensors in order to measure refrigerant pressure in different parts, and the measured refrigerant pressure values are transmitted to the outdoor control device 14a.

The motor of the compressor 231, the four-way switching valve 232, the electric valve 234, and the fan motor of the outdoor fan 237 are connected to the outdoor control device 14a. The rotational speeds and the running and stopping of, e.g., the motor of the compressor 231 and the fan motor of the outdoor fan 237, the switching of the four-way switching valve 232, and the opening degree of the electric valve 234 are controlled by the outdoor control device 14a.

### (2-2) Network

The air conditioning system 1 is configured so that the exchange of information between the air conditioners 10a, 10b and the smartphone 50 is enabled through the internet using a public line 60, the wireless LAN 35, or another network. Because this exchange of information is enabled, the air conditioning system 1 is configured such that the router 30 to which the adapters 20a, 20b are connected, the external server 40, and the smartphone 50 can be connected to the internet using the public line 60 and the network of the wireless LAN 35.

### (2-2-1) Adapters 20a, 20b

The adapters 20a, 20b are network adapters for connecting the air conditioners 10a, 10b to the wireless LAN 35, and in the present embodiment the adapter 20a is built into the indoor unit 11a, while the adapter 20b is externally attached to the indoor unit 11b. The adapter 20b is also embedded into the wall, similar to part of the indoor unit 11b. Because the adapters 20a, 20b are built in and embedded, as will be described in detail hereinafter, the functions to set the connections of the adapters 20a, 20b are incorporated into the indoor units 11a, 11b, and the adapters 20a, 20b can also adapt to these functions of the indoor units 11a, 11b. Because the adapters 20a, 20b employ the same configuration, only the configuration of the adapter 20a is described in this embodiment, while the configuration of the other adapter 20b is not.

The adapter 20a has a communication unit 21a, a control unit 22a, a storage unit 23a, and a timer 24a as shown in FIG. 4, and also has a connect function for connecting the air conditioner 10a to the wireless LAN 35, as well as a control function for controlling the air conditioner 10a.

Control programs and control data are stored in the storage unit 23a. The control unit 22a performs control using the control programs and control data of the storage unit 23a. These control programs and control data correspond to, e.g., Wi-Fi Protected Setup (WPS), and enable easy connection to the wireless LAN 35 through the WPS function of the router 30. The connection setting for booting up the function corresponding to WPS is programmed to be implementable from the indoor unit 11b. The storage unit 23a is also ensured to have a device information storage area 2M2a and an environment information storage area 2M3a. The device information storage area 2M2a is a storage area for temporarily preserving device information transmitted from the air conditioner 10a. The environment information storage area 2M3a is a storage area for temporarily preserving environment information pertaining to temperature and/or humidity transmitted from the air conditioner 10a. Furthermore, the device information storage area 2M2a is ensured to have a function setting information storage area 2A2a, and the function setting information storage area 2A2a is a storage area for temporarily preserving function setting information transmitted from the air conditioner 10a.

Using the timer 24a, the control unit 22a periodically (e.g., every minute) transmits the device information in the device information storage area 2M2a and the environment information in the environment information storage area 2M3a, with notification data which is periodically distributed is included, to the external server 40. This notification data which is periodically distributed is air-conditioning-relevant information that is periodically transmitted from the adapters 20a, 20b to the external server 40.

A server address and an identification number of the adapter 20a are also stored in advance in the storage unit 23a. Furthermore, a device ID assigned to the external server 40 is stored in the storage unit 23a. The device ID is information that uniquely identifies the adapter 20a on the external server 40. The storage unit 23a is ensured to have a communication setting information storage area 2M1a for storing this identification numbers and device ID.

Furthermore, a SETUP button 27 and a MODE button 28 are provided to, e.g., the adapter 20a in order to perform various settings. The SETUP button 27 and the MODE button 28 are connected to the control unit 22a. An LED 20aL is also provided in order to confirm the various settings.

### (2-2-2) Router 30

When the adapters 20a, 20b are connected to the wireless LAN 35, the router 30 automatically detects the presence of the adapters 20a, 20b and registers the network information of the adapters 20a, 20b. The router 30 has, e.g., a WPS function as the function necessary for this detection and registration, and the router also has a WPS button 31 for activating the WPS function. The router 30 also has an LED 30L for confirming the active status of the router. For example, when the adapter 20a is first connected to the wireless LAN 35, the WPS button 31 of the router 30 and the SETUP button 27 of the adapter 20a are pressed simultaneously, the connection settings of the adapter 20a and the router 30 are first implemented. When the router 30, using these connection settings, detects the presence of the adapters 20a, 20b and registers the network information, the adapters 20a, 20b are able to communicate with other network devices in the wireless LAN 35 and network devices on the public line 60. The router 30, which is a communication device for relaying data between two or more different networks, has a communication function for conducting relays between the wireless LAN 35 and the internet using the public line 60, and the router conducts relays between the adapters 20a, 20b and the external server 40.

### (2-2-3) External Server 40

The external server 40 has a communication unit 41, a control unit 42, and a storage unit 43, as shown in FIG. 5. The communication unit 41, which carries the communication function of the external server 40, enables the external server 40 to connect to the internet via the public line 60, and enables communication between the air conditioners 10a, 10b and the smartphone 50 via the external server 40.

Various databases for accumulating various types of data pertaining to the air conditioners 10a, 10b are defined in the storage unit 43. For example, defined in the storage unit 43 is an air-conditioning-relevant information database DB3 for accumulating notification data which is periodically distributed transmitted from the adapters 20a, 20b to the external server 40 via the internet. The air-conditioning-relevant information in this embodiment is information on the air conditioners, the environment thereof, and other information relevant to the running of the air conditioners. In the air-conditioning-relevant information database DB3, various types of data pertaining to the air conditioners 10a, 10b is stored so as to be associated with the device IDs assigned to the adapters 20a, 20b connected to the air conditioners 10a, 10b. The external server 40 is accessed from the smartphone 50 and the air-conditioning-relevant information database DB3 is used to manage the various types of data pertaining to the air conditioners 10a, 10b in both of the adapters 20a, 20b, i.e., in both of the air conditioners 10a, 10b.

Also defined in the storage unit 43 is a basic information database DB1 for storing basic registration information (hereinafter, basic information) pertaining to the air conditioners 10a, 10b. The device IDs of the adapters 20a, 20b, data pertaining to the various functions held by the air conditioners 10a, 10b to which the adapters 20a, 20b are connected, and other information is stored as a single record in the basic information database DB1. Records in the basic information database DB1 correspond one-to-one with the air conditioners 10a, 10b.

Furthermore, defined in the storage unit 43 is an access information database DB2 for storing information pertaining to the various settings implemented by the user of the air conditioners 10a, 10b. The device IDs of the adapters 20a, 20b of the registered air conditioners 10a, 10b, device names set by the user as desired for the air conditioners 10a, 10b, the user's personal information including a login ID and password assigned to the user of the air conditioners 10a, 10b, and other information is stored as a single record in the access information database DB2. The password is for authenticating login authority when the user logs into the external server 40 with the login ID. Records in the access information database DB2 correspond one-to-one with the authority of users.

The control unit 42, which is configured from a CPU, RAM, ROM, and other components, executes the control programs stored in the storage unit 43. The control unit 42 transmits the various types of data stored in the databases described above to the smartphone 50 of the user via the internet using the public line 60. The control unit 42 is configured to be capable of transmitting various types of data to the smartphone 50 in compliance with information transmission requests from the smartphone 50 via the internet. The control unit 42 also transmits operation information received from the smartphone 50 via the internet as a control command to the adapters 20a, 20b. This control command is transmitted from the external server 40 to the adapters 20a, 20b when the notification data which is periodically distributed from the adapters 20a, 20b has been received. The air conditioners 10a, 10b are identified by the device IDs of the adapters 20a, 20b.

### (2-3) Smartphone 50

A case in which the smartphone 50 is used as a portable terminal is described as an example below. The smartphone 50 has a communication unit 51, a control unit 52, a storage unit 53, and an input/output unit 54, as shown in FIG. 5. In addition to a calling function, the communication unit 51 has the function of enabling communication with the internet via the public line 60. The control unit 52 is composed of a CPU, RAM, ROM, and other components, and the storage unit 53 is composed of a flash memory and other components. The input/output unit 54 is formed from a touch screen including a display screen DS 1.

The smartphone 50 is equipped with an air conditioning management program for managing the air conditioners 10a, 10b through the smartphone 50. An air conditioning management application AP1 stored in the storage unit 53 is an air conditioning management program. The air conditioning management application AP1 can be, e.g., downloaded from the external server 40 by a user connecting to the internet via the public line 60. Through an image generated by the air conditioning management application AP1 provided to the display screen DS1, the user performs the device settings of the air conditioners 10a, 10b, the operations of the air conditioners 10a, 10b, and the like. A server address is kept in the air conditioning management application AP1.

### (3) Various Settings

### (3-1) Initial Setting

When the adapters 20a, 20b are connected to the air conditioners 10a, 10b and the router 30, the initial setting for registering the air conditioners 10a, 10b and the adapters 20a, 20b in the external server 40 is automatically implemented. To begin this automatic initial setting, the connection setting is firstly performed.

### (3-1-1) Connection Setting

In the normal connection setting, for example, first the MODE button 28 (see FIG. 3) of the adapter 20a is pressed for a predetermined time so as to be in a "long press," putting the adapter 20a into a standby state in which a connecting setting can be implemented. The WPS button 31 of the router 30 is then pressed for a predetermined time so as to be in a "long press." Furthermore, the SETUP button 27 (see FIG. 3) of the adapter 20a is pressed for a predetermined time so as to be in a "long press."

Because the adapter 20a is built into the indoor unit 11a and the adapter 20b is embedded in a wall of the building 100, the work of pressing the buttons is difficult. In such a case, the connection setting is enabled using the remote controllers 15a, 15b. With the remote controller 15a used as an example, this connection setting is described below.

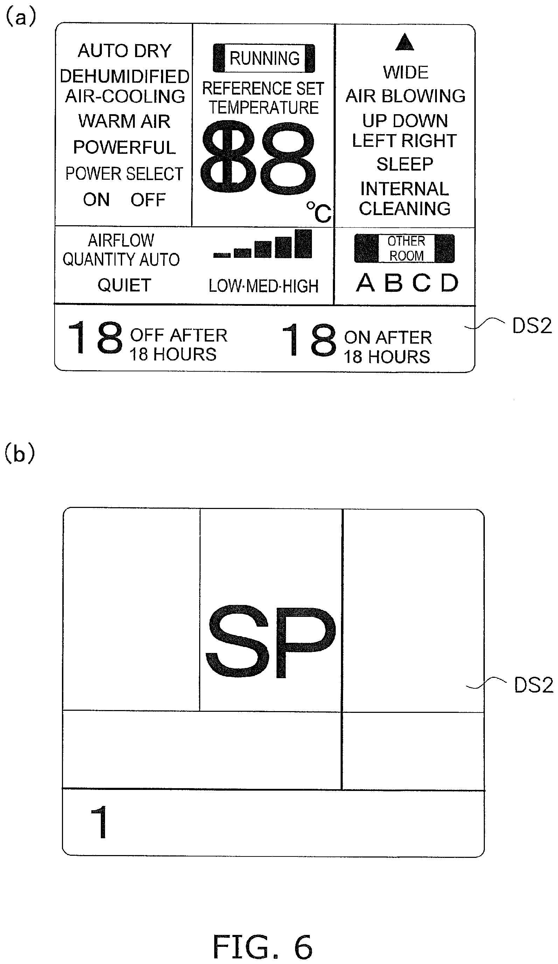

When a specific button (e.g., the "automatic button" or the like) on, e.g., the input/output unit 154 of the remote controller 15a is pressed for a predetermined time so as to be in a "long press," the control unit 152 recognizes that it has been instructed to put the adapter 20a into setup mode. Upon being commanded to implement setup mode, the control unit 152 switches the display of a display screen DS2 from the normal display shown in FIG. 6(a) to the setup mode display shown in FIG. 6(b), in accordance with a program stored in the storage unit 153.

Among the numerals displayed on the display screen in setup mode, "1" indicates a setting state confirmation mode, "2" indicates a WPS setting mode, "3" indicates a mode of switching AP mode, "4" indicates a mode of switching RUN mode, and "5" indicates an adapter initialization mode. These modes can be switched by pressing a mode switching button on the input/output unit 154. Settings in the modes of the displayed numerals are implemented by pressing an enter button on the input/output unit 154. The AP mode in this embodiment is a mode in which the adapter 20a directly connects through the wireless LAN to the smartphone 50. The RUN mode is a mode in which the adapter 20a connects to router 30 through the wireless LAN.

When the enter button on the input/output unit 154 of the remote controller 15a is pressed while "1" is displayed on the display screen DS2, the control unit 152 causes a command to be transmitted from the communication unit 151 to the indoor control device 13a of the indoor unit 11a, the command instructing to transition to a setting state confirmation mode for confirming the setting state. Having received the command to transition to confirmation mode, the indoor control device 13a exchanges information with the control unit 22a of the adapter 20a through the control unit 132a. The control unit 132a acquires from the control unit 22a information indicating whether the adapter 20a is "connected" or "not connected." The "connected" state is a state in which the connection setting between the adapter 20a and the router 30 is already complete, and the "not connected" state is a state in which the connection setting between the adapter 20a and the router 30 is not complete. Next, if the acquired information is "connected," the control unit 132a of the indoor control device 13a repeatedly turns the timer display light L2 on and off in comparatively long intervals. If the acquired information is "not connected," the control unit repeatedly alternates the running display light L1 and the timer display light L2 between on and off. This alternating on and off of the running display light L1 and the timer display light L2 represents RUN mode. If the adapter is in AP mode, the control unit 132a repeatedly turns the running display light L1 on and off in comparatively long intervals.

If the adapter is "not connected," the user presses the mode switching button on the input/output unit 154 of the remote controller 15a, switching to a state of the numeral "2" being displayed on the display screen DS2, in order to connect the adapter 20a and the router 30. The WPS button 31 of the router 30 is also pressed for a predetermined time so as to be in a "long press." Confirming that the numeral "2" is displayed on the display screen DS2, the user presses the enter button to activate WPS setting mode.

When the enter button on the input/output unit 154 of the remote controller 15a is pressed while "2" is displayed on the display screen DS2, the control unit 152 causes a command to be transmitted from the communication unit 151 to the indoor control device 13a of the indoor unit 11a, instructing to transition to WPS setting mode. Having received the command to transition to WPS setting mode, the indoor control device 13a uses the control unit 132a to send a command to adapt the WPS function to the control unit 22a of the adapter 20a. In other words, the adapter 20a, having received this command, is in the same status as when the SETUP button 27 in the adapter 20a is pressed for a predetermined time so as to be in a "long press."

When a command to adapt to the WPS function is sent from the control unit 132a of the indoor control device 13a to the control unit 22a of the adapter 20a, the resulting state is "In WPS." In the state "In WPS," the control unit 132a of the indoor control device 13a repeatedly turns the timer display light L2 on and off in comparatively short intervals. When WPS setting ends, the timer display light L2 turns off.

When connecting the smartphone 50 directly to the adapter 20a through a wireless LAN, the user switches the display on the display screen DS2 to the numeral "3" with the mode switching button on the input/output unit 154 of the remote controller 15a, and presses the enter button on the input/output unit 154. When the enter button on the input/output unit 154 of the remote controller 15a is pressed while "3" is displayed on the display screen DS2, the control unit 152 causes a command to be transmitted from the communication unit 151 to the indoor control device 13a of the indoor unit 11a, instructing to transition to AP mode. Having received the command to transition to AP mode, the indoor control device 13a uses the control unit 132a to send a command to transition to AP mode to the control unit 22a of the adapter 20a. In other words, the adapter 20a, having received this command, is in the same status as when the MODE button 28 is pressed for a predetermined time so as to be in a "long press" while the adapter 20a is in RUN mode. This creates a state in which the smartphone 50 is able to directly connect to the adapter 20a through the wireless LAN. At this time, the control unit 132a of the indoor control device 13a repeatedly turns the running display light L1 on and off at comparatively long intervals.

Conversely, when the router 30 is in AP mode and the user wishes to transition to RUN mode, the user switches the display on the display screen DS2 to the numeral "4" with the mode switching button on the input/output unit 154 of the remote controller 15a, and presses the enter button on the input/output unit 154. When the enter button on the input/output unit 154 of the remote controller 15a is pressed while "4" is displayed on the display screen DS2, the control unit 152 causes a command to be transmitted from the communication unit 151 to the indoor control device 13a of the indoor unit 11a, instructing to transition to RUN mode. Having received the command to transition to RUN mode, the indoor control device 13a uses the control unit 132a to send a command to transition to RUN mode to the control unit 22a of the adapter 20a. At this time, the displays of the LEDs 11aL are the same as in setting state confirmation mode.

When the user wishes to initialize the adapter 20a, the user switches the display on the display screen DS2 to the numeral "5" with the mode switching button on the input/output unit 154 of the remote controller 15a, and presses the enter button on the input/output unit 154. When the enter button on the input/output unit 154 of the remote controller 15a is pressed while "5" is displayed on the display screen DS2, the control unit 152 causes a command to be transmitted from the communication unit 151 to the indoor control device 13a of the indoor unit 11a, instructing to initialize the adapter 20a. Having received the command to initialize the adapter 20a, the indoor control device 13a uses the control unit 132a to send a command to perform initialization to the control unit 22a of the adapter 20a. In other words, the adapter 20a, having received this command, goes into the same status as when the SETUP button 27 and the MODE button 28 are simultaneously pressed for a predetermined time so as to be in a "long press," and the adapter 20a is initialized.

### (3-1-2) Settings After Connection Settings

When the adapter 20a is connected to the wireless LAN 35, the adapter is programed so as to, e.g., automatically transmit an identification number from the communication unit 21a of the adapter 20a to the communication unit 41 of the external server 40 via the router 30. The adapter 20b is similarly programed so as to automatically transmit an identification number to the external server 40 via the router 30.

When the control unit 42 of the external server 40 receives the identification numbers from the adapters 20a, 20b, the control unit creates individual device IDs for both of the identification numbers of the adapters 20a, 20b, associates the identification numbers and the created device IDs, and registers them in the basic information database DB1. The control unit 42 of the external server 40 also transmits the device IDs to the corresponding adapters 20a, 20b.

When the adapters 20a, 20b receive the device IDs from the external server 40, the adapters store the device IDs in the storage unit 23a. Next, the adapters 20a, 20b transmit to the external server 40 data pertaining to the various functions held by the air conditioners 10a, 10b connected to the adapters 20a, 20b.

When the communication unit 41 of the external server 40 receives the data pertaining to the various functions held by the air conditioners 10a, 10b from the adapters 20a, 20b, the control unit 42 correlates the device IDs of the adapters 20a, 20b and the data pertaining to the various functions held by the air conditioners 10a, 10b, and registers them in the basic information database DB1 of the storage unit 43. The air conditioners 10a, 10b are thereby registered in the external server 40, and initial setting of the air conditioners 10a, 10b is ended.

When this initialization setting is ended, the external server 40 and the adapters 20a, 20b are able to exchange data with each other via the internet using the public line 60 while identifying the presence of each other.

### (3-2) Setting Devices of Air Conditioners

Setting the devices of the air conditioners 10a, 10b is done by operating the smartphone 50, and is carried out after the initialization setting of the air conditioners 10a, 10b. The user boots up the air conditioning management application AP1 installed in the smartphone 50 and accesses the external server 40. The smartphone 50 is then used to implement settings such as the device names, the device installation locations, whether or not the devices can be operated externally, etc. Information pertaining to these device settings is stored in a device setting information storage area 5A1 of the device information storage area 5M2 of the smartphone 50, a device setting information storage area 4A1 of the device information storage area 4M2 of the external server 40, and the adapters 20a, 20b. For example, in the adapter 20a, the information pertaining to the device settings is stored in a device setting information storage area 2A1a of the device information storage area 2M2a of the storage unit 23a.

### (4) Monitoring and Operation of Air Conditioners Using Air Conditioning Management Application

The monitoring and operation of the air conditioners 10a, 10b, performed by the smartphone 50 by booting up the air conditioning management application AP1, shall be described in a simple manner. Outside of the building 100, when the air conditioning management application AP1 of the smartphone 50 is booted up and the login ID and password are inputted by the user, the control unit 52 requests the external server 40, via the communication unit 51, for information of the air conditioners 10a, 10b connected to all adapters 20a, 20b associated with the login ID. Upon receiving this information transmission request, the external server 40 transmits to the smartphone 50 air-conditioning-relevant information pertaining to the air conditioners 10a, 10b to which the adapters 20a, 20b associated with the login ID are connected, this information being stored in the air-conditioning-relevant information database DB3. This air-conditioning-relevant information pertaining to the air conditioners 10a, 10b includes device information, environment information, and the like.

The air-conditioning-relevant information pertaining to the air conditioners 10a, 10b is received due to the control unit 52 executing the air conditioning management application AP1, and is temporarily stored in the device information storage area 5M2 and the environment information storage area 5M3 of the storage unit 53. On the basis of the air-conditioning-relevant information pertaining to the air conditioners 10a, 10b, the control unit 52, by executing the air conditioning management application AP1, creates an air conditioner management screen for monitoring and operation, which is displayed on the display screen DS1 of the input/output unit 54.

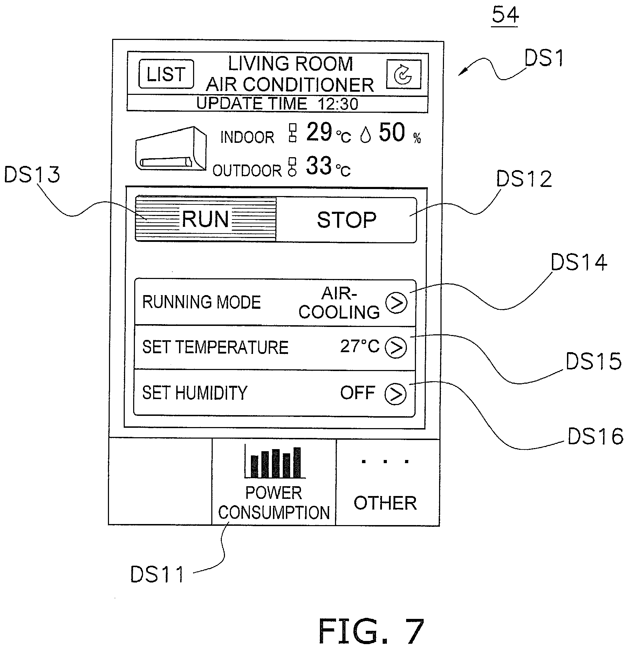

Specifically, when the air conditioning management application AP1 of the smartphone 50 is booted up, a list image of the air conditioners 10a, 10b that can be monitored and/or operated is first displayed. When the user then taps one of the icons of the air conditioners 10a, 10b included in the list image on the display screen DS1, an air conditioner management screen for monitoring and operating, e.g., a "living room air conditioner" (e.g., the air conditioner 10a) such as is shown in FIG. 7 is displayed by the touch screen function. By executing the air conditioning management application AP1, the control unit 52 refers to the air-conditioning-relevant information pertaining to the air conditioners 10a, 10b temporarily stored in the storage unit 53. For example, the control unit 52 creates an air conditioner management screen listing the indoor temperature of 29°C, the outdoor temperature of 33°C, and the indoor humidity of 50%, which are stored in the environment information storage area 5M3. The control unit 52 also creates an air conditioner management screen listing the running/stopped state, the running mode which is air-cooling, the set temperature of 27°C, and other information stored in the function setting information storage area 5A2. The control unit 52 also changes the configuration of the air conditioner screen in accordance with the device setting information of the "living room air conditioner." For example, when the device setting information of FIG. 4 indicates that the "living room air conditioner" is provided with a function for measuring power consumption, a monitor screen DS 11 with the words "power consumption" for transitioning to a power consumption display screen is displayed, such as that of the air conditioner management screen shown in FIG. 7.

By executing the air conditioning management application AP1, the control unit 52 receives operation input for the air conditioners 10a, 10b from the user via the input/output unit 54 displaying the air conditioner management screen. When the user presses a "stop" button DS12 in the display screen DS1 displaying the air conditioner management screen, a "stop running" operation command which changes the "living room air conditioner" from a running state to a stopped state is sent from the input/output unit 54 to the control unit 52. In the control unit 52, the, e.g., "living room air conditioner" is specified to be the air conditioner 10a on the basis of the information of the device setting information storage area 5A1, and in compliance with this "stop running" operation command, the function setting information of the air conditioner 10a stored in the function setting information storage area 5A2 of the storage unit 53 is rewritten from a "running state" to a "stopped state." The information that changes the air conditioner 10a to a stopped state is sent from the communication unit 51 of the smartphone 50 to the communication unit 41 of the external server 40. The information that changes the air conditioner 10a to a stopped state, received by the communication unit 51 of the external server 40, is temporarily stored in the function setting information storage area 4A2 of the storage unit 43 by the control unit 42.

The external server 40 sends a "stop running" operation command to the adapters 20a, 20b when the adapters 20a, 20b transmit, e.g., notification data which is periodically distributed to the external server 40. When notification data which is periodically distributed is transmitted, the, e.g., communication unit 21a of the adapter 20a and the communication unit 41 of the external server 40 are connected through the internet via the public line 60. When this connection is recognized by the control unit 42, the information that changes the air conditioner 10a to a stopped state, stored in the function setting information storage area 4A2 of the storage unit 43, is transmitted by the communication unit 41 and the communication unit 21a. The control unit 22a of the adapter 20a, having received the information that changes the air conditioner 10a to a stopped state from the external server 40, rewrites the function setting information stored in the function setting information of the function setting information storage area 2A2a of the storage unit 23a from a running state of the air conditioner 10a to a stopped state. At the same time, the control unit 22a of the adapter 20a transmits a command to change from a running state to a stopped state to the control unit 132a of the indoor control device 13a of the indoor unit 11a. The control unit 132a, having received the command to change to a stopped state, stops the running of the air conditioner 10a, and rewrites the function setting information stored in the function setting information storage area 3A2a of the storage unit 133a from a running state to a stopped state.

Conversely, when the "living room air conditioner" is in a stopped state and a "run" button DS13 is tapped in the display screen DS1 of the smartphone 50, an operation command to change the "living room air conditioner" to a running state is sent to the control unit 52. When the air conditioner changes from a stopped state to a running state, the function setting information of the running state is transmitted from the external server 40 to the indoor unit 11a of the air conditioner 10a via the adapter 20a as described above, and the air conditioner 10a is changed from a stopped state to a running state.

Furthermore, when the user inputs an operation by tapping one of the other buttons, which consist of an "operation mode" button DS14, a "set temperature" button DS15, and a "set humidity" button DS16, the execution of the air conditioning management application AP1 causes the function setting information to be sent from the smartphone 50 to the adapters 20a, 20b via the external server 40.

### (5) Monitoring and Operation of Air Conditioners From Within Building Using Air Conditioning Management Program

Inside the building 100, when the air conditioning management application AP1 of the smartphone 50 is booted up and the login ID and password are inputted by the user, the smartphone 50 and the adapters 20a, 20b are connected via the wireless LAN 35. Therefore, the smartphone 50 and the adapters 20a, 20b are connected by the execution of the air conditioning management application AP1, and the communication unit 51 of the smartphone 50 directly establishes communication with the communication unit 21a of the adapters 20a, 20b. At this time, the exchanging of information between the smartphone 50 and the adapters 20a, 20b is not carried out via the external server 40. However, device information rewritten due to commands from the smartphone 50 is periodically sent as notification data which is periodically distributed to the external server 40. Therefore, although there is a time lag, the device information stored in the storage unit 43 of the external server 40 is periodically updated.

When the smartphone 50 and the adapters 20a, 20b are connected, the execution of the air conditioning management application AP1 causes the control unit 52 to request the adapters 20a, 20b, via the communication unit 51, for information of the air conditioners 10a, 10b connected to the adapters 20a, 20b. Upon receiving this information transmission request, the adapters 20a, 20b transmit to the smartphone 50 the air-conditioning-relevant information pertaining to the air conditioners 10a, 10b stored in the storage unit 23a. From this point until an air conditioner management screen for monitoring and operation is created, the actions of the air conditioning management application AP1 of the smartphone 50 are the same as when the smartphone is outside of the building 100. Until operation input from the user for the air conditioners 10a, 10b is received, the actions of the air conditioning management application AP1 of the smartphone 50 are the same as when the smartphone is outside of the building 100.

### (6) Characteristics

### (6-1)

As described above, the remote controllers 15a, 15b are configured to be capable of transmitting run commands and other operation information to the indoor units 11a, 11b (examples of main bodies) in order to operate the air conditioners 10a, 10b. The air conditioners 10a, 10b are configured so that functions for setting the connections of the adapters 20a, 20b (examples of LAN connection units) are incorporated into the indoor units 11a, 11b, and the adapters 20a, 20b are also able to comply with these functions of the indoor units 11a, 11b. By using the remote controllers 15a, 15b to execute the functions for setting the connections of the indoor units 11a, 11b, the user can then implement settings pertaining to the LAN without physically accessing the SETUP button 27 and the MODE button 28 of the adapters 20a, 20b. Even in cases in which the adapter 20a is installed in an attic, and cases in which the adapter is embedded in a wall, as is the case with the ceiling-embedded indoor unit 11a and the wall-embedded indoor unit 11b, the user can use the remote controllers 15a, 15b to implement the LAN settings while in the room RM. Thus, in the air conditioning system 1, the LAN settings of adapters 20a, 20b can be easily implemented regardless of where the adapters 20a, 20b are installed.

### (6-2)

The air conditioners 10a, 10b have the display screen DS2 and LEDs 11aL, 11bL (examples of the display units) for presenting displays, in order to give notifications of setting information regarding the settings pertaining to the LAN using the remote controllers 15a, 15b. With such a configuration, settings pertaining to the LAN can be implemented in the adapters 20a, 20b while confirming the specifics of the LAN settings displayed on the display screen DS2 and the LEDs 11aL, 11bL, and erroneous operations of the settings pertaining to the LAN in the adapters 20a, 20b can be reduced.

In the air conditioners 10a, 10b, the indoor units 11a, 11b have LEDs 11aL, 11bL, and setting information is displayed using the LEDs 11aL, 11bL. A case is considered in which a remote controller having no display screen DS2, similar to the remote controller 15a, is an accessory to an air conditioner and an operator cannot be notified of setting information using the remote controller. Even in such a case, the air conditioner 10a would be able to pass LAN setting information on to someone such as a user by using the LEDs 11aL. In other words, when the adapter setting specifics can be confirmed using the LEDs, it is possible to confirm the adapter setting specifics in the air conditioner regardless of the type of remote controller, and there can be a greater variety of air conditioners with which the adapter setting specifics can be confirmed.

However, when setting information is displayed in the manner of the display screen DS2 of the remote controller 15a, the settings pertaining to the LAN can be implemented while the setting specifics are confirmed in the hand holding the remote controller 15a. Thus, if the specifics relating to the adapter 20a can be confirmed in hand, the connection settings of the adapter 20a can be implemented while looking only at, e.g., the remote controller 15a, which is convenient.

### (6-3)

The adapter 20a has the SETUP button 27 (an example of a setting button) for implementing settings pertaining to the LAN without using the remote controller 15a, as shown in FIG. 3. Because of this configuration, settings pertaining to the LAN can be implemented by the SETUP button 27 of the adapter 20a even in circumstances in which the remote controller 15a of the air conditioner 10a cannot be used. Due to the adapter 20a having the SETUP button 27, it is possible to resolve inconveniences in which LAN settings cannot be implemented in the adapter with an air conditioner to which the remote controller is not an accessory.

### (6-4)

The adapter 20a is attached inside the indoor unit 11a, or in other words, inside the air conditioner 10a, as shown in FIG. 3. When the adapter 20a is built into the indoor unit 11a, labor of attaching the adapter 20a to the indoor unit 11a is eliminated. Additionally, because the settings pertaining to the LAN of the adapter 20a can be implemented by the remote controller 15a, there is no work involved with an adapter 20a in an attic in order to implement settings, such as pressing the SETUP button 27 on the adapter 20a. Thus, the work of embedding the indoor unit 11a in the ceiling also involves installing the adapter 20a on the ceiling, and due to the connecting settings of the adapter 20a installed in the attic being implemented by the remote controller 15a, it is possible to reduce the man-hours involved in constructing the air conditioner 10a and the adapter 20a, and in the settings pertaining to the LAN.

### (7) Modifications

### (7-1) Modification A

In the above embodiment, a case was described in which notification of the setting information during the setting of the connections of the adapters 20a, 20b is given by the display screen DS2 and the LEDs 11aL, 11bL of the air conditioners 10a, 10b. However, the method of giving notification of the setting information is not limited to only a display by display units, and another possible example of a method is notification by sound units that emit sounds.

### (7-2) Modification B

In the above embodiment, the smartphone 50 was described as an example of a portable terminal, but other possible examples of the portable terminal include a mobile telephone, and a tablet-style computer, notebook-style computer, or another portable computer.

### (7-3) Modification C

In FIG. 1 of the above embodiment, only one building 100 is shown, but a single air conditioning system 1 may include multiple groups of air conditioners 10a, 10b, adapters 20a, 20b, and wireless LANs 35 installed in multiple buildings 100. In other words, when the external server 40 for the internet is managed by, e.g., the manufacturing company, retail company, or maintenance company of the air conditioners, information of the air conditioners in numerous buildings 100 can be saved on the external server 40.

In the above embodiment, a case was described in which two air conditioners 10a, 10b were connected to the wireless LAN 35, but it is also an option that there by one, three, or more air conditioners connected to the wireless LAN 35.

The LAN with which the present invention can be applied is not limited to the wireless LAN 35, and the invention of the present application can also be applied in the case of a wired LAN.

### (7-4) Modification D

In the above embodiment, a case was described in which one outdoor unit 12a, 12b each was connected to one indoor unit 11a, 11b, but the invention of the present application can also be applied to a multi-style air conditioner in which a plurality of indoor units are connected to one outdoor unit.

In the above embodiment, a case was described in which one remote controller 15a, 15b each was an accessory to one indoor unit 11a, 11b, but the present invention can also be applied to cases in which a plurality of remote controllers are accessories to one indoor unit, as well as cases in which one remote controller is an accessory to a plurality of indoor units.

### (7-5) Modification E

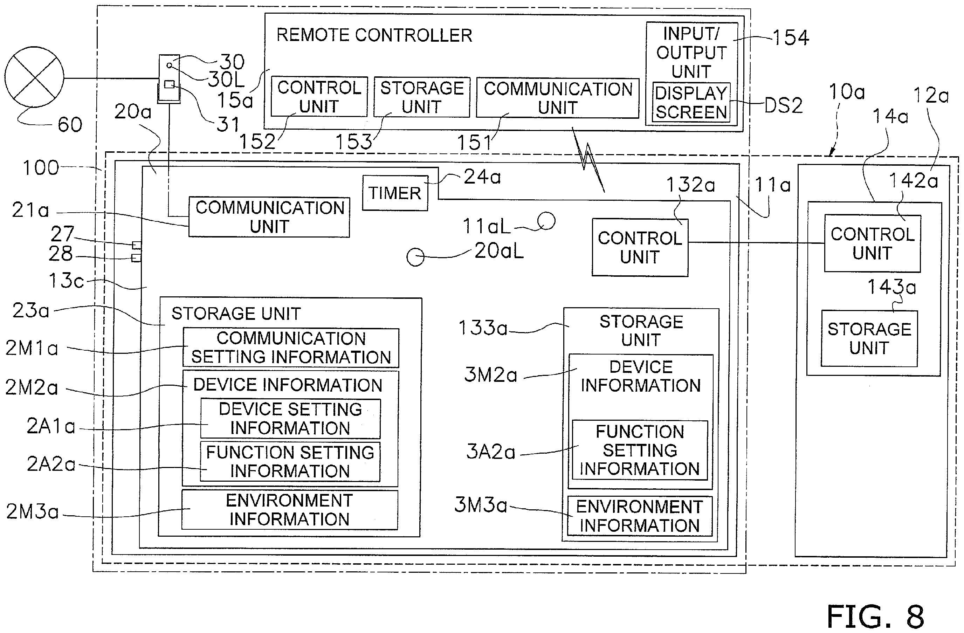

In the above embodiment, a case was described in which the functions of the adapters 20a, 20b and the functions of the indoor control devices 13a, 13b of the indoor units 11a, 11b are installed separately, but the air conditioners can also be given the adapter functions. For example, an indoor control device 13c shown in FIG. 8 comprises all the components that had been provided to the adapter 20a, such as the communication unit 21a and the storage unit 23a, and this indoor control device comprises a control unit 132c having both the functions of the control unit 22a of the adapter 20a and the functions of the control unit 132a of the indoor control device 13a. In the air conditioner 10c of FIG. 8 configured in this manner, the functions of the adapter 20a are incorporated into the indoor control device 13c of the indoor unit 11c, and the air conditioner has a LAN function. In this case, the indoor control device 13c serves as a LAN connection unit.

### REFERENCE SIGNS LIST

1 Air conditioning system
10a, 10b, 10c Air conditioner
1 a, 11b, 11c Indoor unit (main body)
11aL, 11bL LED (display unit)
13a, 13b, 13c Indoor control device
15a, 15b Remote controller
20a, 20b Adapter
27 SETUP button (setting button)
30 Router
31 Local area network (LAN)
40 External server
50 Smartphone
60 Public line
DS1 Display screen
DS2 Display screen (display unit)

## Claims

1. An air conditioning system, comprising:
an air conditioner (10a, 10b) which has a main body (11a, 11b) and a remote controller (15a, 15b) for transmitting operation information to the main body, and which can be operated by the remote controller; and
a LAN connection unit (20a, 20b, 13c) installed in the air conditioner in order to connect the air conditioner to a LAN (31) and transmit information obtained from the air conditioner through the LAN; **characterized in that**
the air conditioner is configured so that the remote controller can be used to implement connection settings pertaining to the LAN in the LAN connection unit, and
the air conditioner has at least one of a display unit (DS2, 11aL, 11bL) for presenting display and a sound unit for emitting sounds, in order to give notification of setting information regarding the connection settings pertaining to the LAN using the remote controller.

2. The air conditioning system according to claim 1, wherein
the main body of the air conditioner has a LED (11aL, 11bL) as the display unit, and the setting information is displayed using the LED.

3. The air conditioning system according to claim 1 or 2, wherein
the remote controller of the air conditioner has a display screen (DS2) as the display unit, the main body of the air conditioner is capable of receiving information of settings pertaining to the LAN, which is obtainable from the LAN connection unit, and the setting information is displayed on the display screen of the remote controller.

4. The air conditioning system according to any of claims 1 to 3, wherein
the LAN connection unit has a setting button (27) for implementing settings pertaining to the LAN without using the remote controller.

5. The air conditioning system according to any of claims 1 to 4, wherein
the LAN connection unit is an adapter (20a, 20b); and
the adapter is attached inside the air conditioner.

## Patentansprüche

1. Klimaanlagensystem, umfassend:
eine Klimaanlage (10a, 10b), die einen Hauptkörper (11a, 11b) und eine Fernsteuerung (15a 15b) zum Übertragen von Betriebsinformationen an den Hauptkörper hat, und der mit der Fernsteuerung bedient werden kann; und
eine LAN-Verbindungseinheit (20a, 20b, 13c), die in der Klimaanlage installiert ist, um die Klimaanlage mit einem LAN (31) zu verbinden und Informationen zu übertragen, die von der Klimaanlage durch das LAN bezogen wurden; **dadurch gekennzeichnet, dass**
die Klimaanlage so konfiguriert ist, dass die Fernsteuerung verwendet werden kann, um Verbindungseinstellungen zu implementieren, die das LAN in der LAN-Verbindungseinheit betreffen, und
die Klimaanlage zumindest eine von einer Anzeigeeinheit (DS2, 11aL, 11bL) zum Darstellen einer Anzeige und einer Geräuscheinheit zum Aussenden von Geräuschen hat, um eine Benachrichtigung einer Einstellungsinformation hinsichtlich der Verbindungseinstellungen abzugeben, die das LAN betreffen, unter Verwendung der Fernsteuerung.

2. Klimaanlagensystem nach Anspruch 1, wobei
der Hauptkörper der Klimaanlage eine LED (11aL, 11bL) als die Anzeigeeinheit hat, und die Einstellungsinformation unter Verwendung der LED angezeigt wird.

3. Klimaanlagensystem nach Anspruch 1 oder 2, wobei
die Fernsteuerung der Klimaanlage einen Anzeigebildschirm (DS2) als die Anzeigeeinheit hat, der Hauptkörper der Klimaanlage dazu imstande ist, eine Information von Einstellungen betreffend das LAN zu empfangen, die von der LAN-Verbindungseinheit beziehbar ist, und die Einstellungsinformation auf dem Anzeigebildschirm der Fernsteuerung angezeigt wird.

4. Klimaanlagensystem nach einem der Ansprüche 1 bis 3, wobei
die LAN-Verbindungseinheit einen Einstellungsknopf (27) zum Implementieren von Einstellungen betreffend das LAN hat, ohne die Fernsteuerung zu verwenden.

5. Klimaanlagensystem nach einem der Ansprüche 1 bis 4, wobei
die LAN-Verbindungseinheit ein Adapter (20a, 20b) ist; und
der Adapter innerhalb der Klimaanlage befestigt ist.

## Revendications

1. Système de climatisation comprenant :
un climatiseur (10a, 10b) qui a un corps principal (11a, 11b) et un dispositif de commande à distance (15a, 15b) pour la transmission d'informations de fonctionnement au corps principal, et qui peut être actionné par le dispositif de commande à distance ; et
une unité de connexion LAN (20a, 20b, 13c) installée dans le climatiseur afin de connecter le climatiseur à un LAN (31) et de transmettre des informations obtenues du climatiseur à travers le LAN ; **caractérisé en ce que**
le climatiseur est configuré de sorte que le dispositif de commande à distance peut être utilisé pour mettre en oeuvre des paramètres de connexion se rapportant au LAN dans l'unité de connexion LAN, et
le climatiseur a au moins une parmi une unité d'affichage (DS2, 11aL, 11bL) pour la présentation de l'affichage et une unité sonore pour l'émission de sons, afin de donner une notification d'informations de paramétrage concernant les paramètres de connexion se rapportant au LAN en utilisant le dispositif de commande à distance.

2. Système de climatisation selon la revendication 1, dans lequel
le corps principal du climatiseur a une LED (11aL, 11bL) comme unité d'affichage, et les informations de paramétrage sont affichées à l'aide de la LED.

3. Système de climatisation selon la revendication 1 ou 2, dans lequel
le dispositif de commande à distance du climatiseur a un écran d'affichage (DS2) comme unité d'affichage, le corps principal du climatiseur est capable de recevoir des informations de paramètres se rapportant au LAN, qui peuvent être obtenues de l'unité de connexion LAN, et les informations de paramétrage sont affichées sur l'écran d'affichage du dispositif de commande à distance.

4. Système de climatisation selon l'une quelconque des revendications 1 à 3, dans lequel
l'unité de connexion LAN a un bouton de paramétrage (27) pour la mise en oeuvre de paramètres se rapportant au LAN sans utiliser le dispositif de commande à distance.

5. Système de climatisation selon l'une quelconque des revendications 1 à 4, dans lequel
l'unité de connexion LAN est un adaptateur (20a, 20b) ; et
l'adaptateur est fixé à l'intérieur du climatiseur.
